# EUROPÄISCHE PATENTSCHRIFT

(11) **EP 0 339 291 B1**
(45) Veröffentlichungstag und Bekanntmachung des Hinweises auf die Patenterteilung: **11.08.1993**
(21) Anmeldenummer: 89105698.8
(22) Anmeldetag: 31.03.1989
(51) Int. Cl.: H02K 5/167, F16C 35/00, F16C 17/22, H02K 1/30

(54) **Vertikalachsige elektrische Maschine in Schirmbauweise**
Vertical shaft electric machine of the screen type
Machine électrique à axe vertical du type à écran

(30) Priorität: 26.04.1988 CH 1556/88
(43) Veröffentlichungstag der Anmeldung: 02.11.1989
(73) Patentinhaber: ASEA BROWN BOVERI AG, 5400 Baden (CH)
(72) Erfinder: Starcevic, Mihailo, CH-5507 Mellingen (CH)

(56) Entgegenhaltungen:
- DE-A- 1 947 043
- DE-C- 416 740
- DE-C- 889 319
- DE-C- 962 911
- DE-C- 966 540
- DE-C- 969 451
- FR-A- 1 171 936
- FR-A- 1 189 531
- FR-A- 2 292 365
- US-A- 1 687 513
- US-A- 3 271 607
- US-A- 3 806 211

## Beschreibung

Die Erfindung bezieht sich auf eine vertikalachsige elektrische Maschine in Schirmbauweise, insbesondere Hydrogenerator, mit einem auf einem Fundament befestigten oder in einer Fundamentgrube und dort gegen die Grubenwand abgestützten Stator und einem in wesentlichen scheibenförmigen Rotor mit einem kombinierten Trag- und Führungslager, welches auf einer gleichfalls auf dem Fundament abgestützten Lagertragkonstruktion befestigt ist.

Eine derartige elektrische Maschine ist beispielsweise aus dem Buch von Wiedemann-Kellerberger "Konstruktion elektrischer Maschinen" Springer Verlag, Berlin-Heidelberg-New York 1967, S. 169, Abb, 56, bekannt.

Generatoren für Antrieb durch Kaplanturbinen - seltener für Francis-, manchmal auch für Propellerturbinen - werden vielfach als sogenannte Schirmtypen ausgeführt, bei welchen der Rotor fliegend - also ohne oberes Halslager - auf der Welle sitzt (vgl. a.a.O., S. 167, Abb. 54 oder S. 169, Abb. 56). Das Traglager ist mit dem unteren Halslager kombiniert und im unteren Tragstern eingebaut. Der Tragstern stützt sich auf dem Fundament ab.

Weil das Trag- und Führungslager und der zentrale Bereich der Lagertragkonstruktion trotz intensiver Kühlung (durch das Schmiermittel) eine wesentlich höhere Temperatur annehmen als die peripheren Teile der Lagertragkonstruktion, entstehen mechanische Spannungen, die bei starren Lagertraganordnungen auf das Fundament übertragen werden müssen.

Eine Möglichkeit, derartige Belastungen vom Fundament fernzuhalten besteht darin, den Tragstern mit Schrägarmen bzw. Schrägspeichen zu versehen. Auf diese Weise werden unter Beibehaltung der Zentrierung und nur unwesentlicher Verkleinerung der radialen Steifigkeit Dehnungen der zentralen Bauteile in eine relative Drehung zwischen besagten Bauteilen und dem Fundament umgesetzt (vgl. DE-PS 2 495 236 oder US-PS 4,258,280). Die Schrägspeicherlösung erfordert jedoch eine aufwendige Stahlkonstruktion mit beträchtlich grosser axialer Höhe und ist für Schirmgeneratoren nur bedingt anwendbar.

Gegenstand der DE-A-1947043 ist ein Gleichstrommotor vertikaler Bauart, wie er z.B. als Stauchmotor in einem Walzgerüst eingesetzt wird. Der feststehende Teil des Lagers ruht auf einer Tragkonstruktion, die gegenüber dem Maschinengehäuse mittels eines mit grossflächigen Durchbrüchen versehenen hohlkegelstumpfartigen Gebildes und radialen Streben abgestützt ist. Während der durch das Walzprogramm bedingten Stillstandszeiten treten dort Belastungen des Axial-Pendelrollenlagers auf. Zur Entlastung des Lagers ist im festehenden Lagerteil eine selbsthemmende Schraubenspindel mit einem Exzenterhebel gelagert. Mittels einer hydraulischen Zug-Druck-Presse, welche durch die besagten Durchbrüche geführt ist, wird die Schraubenspindel in Drehung versetzt. Diese wiederum hebt die Welle des Motors an. und entlastet somit das Lager.

Aus der US-A-3271607 ist ein vertiaklachsiger Wasserkraftgenerator in Scheibenbauweise bekannt. Sein Traglager ruht auf einer am Statorgehäuse befestigten Lagertraganordnung. Schliesslich ist aus DE-C-966540 ein Wasserkraftgenerator in Schirmbauweise bekannt, bei dem das Traglager auf einem Lagerstern befestigt ist, der sich auf dem Fundament abstützt.

Ausgehend vom Stand der Technik liegt der Erfindung die Aufgabe zugrunde, eine vertikalachsige elektrische Maschine in Schirmbauweise zu schaffen, die eine konstruktiv einfache Lagerkonstruktion aufweist und bei welcher die Zentrierung des Rotors gegenüber dem Stator in allen Betriebszuständen erhalten bleibt.

Diese Aufgabe wird erfindungsgemäss durch die in den Patentansprüchen gekennzeichnete Erfindung gelöst.

Ein derartiger Aufbau ist in einfacher Weise als Blech/Schweisskonstruktion zu realisieren. Im Innern des Kegelstumpfes finden neben der zur Wasserkraftmaschine führenden Welle Nebenaggregate wie Oelkühler und Oelpumpe Platz.

Der Kegelstumpfmantel wirkt im weitesten Sinne wie eine Schrägspeichenanordnung mit Axial-Schrägarmen:
Bei Erwärmung des Lagers und der daran angrenzenden zentralen Teile der Tragkonstruktion bleibt die gegenseitige Zentrierung von Rotor und Stator erhalten. Thermisch bedingte Dehnungen werden in eine axiale Verlängerung des Kegelstumpfes umgesetzt, die radiale Steifigkeit bleibt erhalten.

Der Rotor ist vorzugsweise als ebene Scheibe ausgebildet, die an ihrem Aussenumfang Schwungmasse, z.B. in Form von Ringen oder Blechsegmenten, trägt. An diesen Rotorringen sind die Rotorpole in üblicher Weise befestigt. Zur Versteifung des Rotors in Axialrichtung sind vorzugsweise radiale Versteifungsrippen vorgesehen, die bei grösseren Eisenlängen eine nach aussen zunehmende axiale Höhe aufweisen. Ihre Höhe - und damit ihre versteifende Wirkung-ist nur durch den Kegelstumpfmantel begrenzt. Neben der Versteifung dienen sie gleichzeitig der Rotorventilation.

Der Rotor stützt sich dabei unmittelbar auf dem Lager ab. Eine Nabe im üblichen Sinn existiert nicht mehr.

Anstelle eines scheibenförmigen Rotors kann dieser auch in Form eines Hohlkegelstumpfes ausgebildet sein. Auch ist die Kombination einer ebenen Scheibe mit einem derartigen Hohlkegelstumpf möglich.

Eine derartige Konstruktion ohne Nabe ermöglicht es erstmals, bei einem ebenen Scheibenrotor das Trag- und Führungslager axial gesehen in die Mitte der Eisenlänge bzw. der Pole zu legen, so dass der Hebelarm zwischen dem Kraftangriffspunkt der Rotormasse und dem Führungslager zu Null wird.

Die Erfindung ermöglicht bei gleicher Einheitsleistung neben einer wesentlichen Vereinfachung der Konstruktion und deren Berechnung eine Verkleinerung des Bauvolumens. Die Generatorgruppe und Kranhöhe sind reduziert, das ganze Maschinenhaus wird niedriger. Die Fundamente sind wegen der gleichmässigen Belastung einfacher; es müssen keine oder nur sehr kleine Maschinenteile einbetoniert werden. Die grössten Transportgewichte (Rotornabe, Traglager-Zentralkörper) sind reduziert.

### Kurze Beschreibung der Zeichnungen

In der Zeichnung ist ein Ausführungsbeispiel des Erfindungsgegenstandes z.T. stark schematisiert dargestellt; dabei zeigt
- Fig. 1: einen Längsschnitt durch einen Schirmgenerator;
- Fig. 2: eine Draufsicht, teilweise im Schnitt auf den Schirmgenerator;
- Fig. 3: einen vergrösserten Ausschnitt aus Fig. 2, aus dem die unmittelbare Abstützuung des Stators an der Wand der Fundamentgruppe hervorgeht;
- Fig. 4: eine Ausführungsform eines Schirmgenerators mit einem hohlkegelstumpfförmigen Rotor.

### Detaillierte Beschreibung der Erfindung anhand eines Ausführungsbeispiels

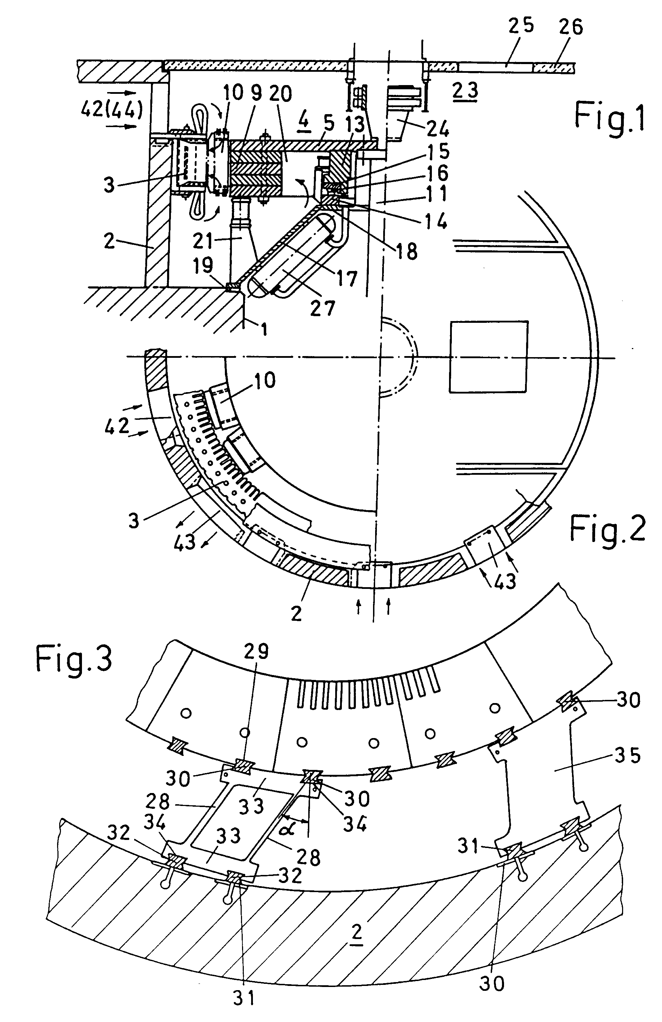

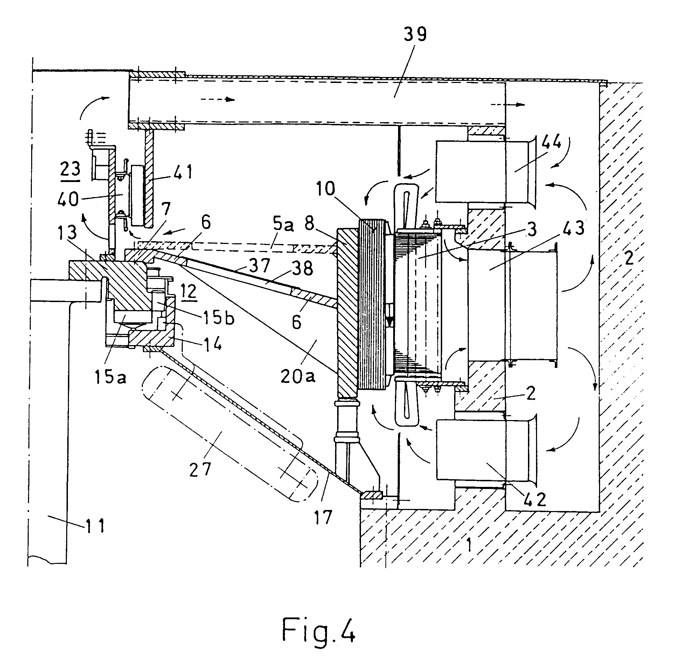

Der Schirmgenerator nach Fig. 1 ist in einer Fundamentgruppe 1 mit kreiszylindrischer Wand 2 eingebettet. Sein Stator 3 ist über Abstützelemente 4, deren Aufbau später anhand von Fig. 3 erläutert wird, ohne eigentliches Statorgehäuse an der Wand 2 abgestützt. Der Rotor 4 besteht aus einer ebenen Scheibe 5, die bei grösseren Rotordurchmessern aus mehreren Platten zusammengeschweisst sein kann. Im Randbereich der Scheibe 5 sind von unten eine Mehrzahl von Ringen 9 oder Ringsegmenten befestigt. Diese bilden zusammen mit den am Aussenumfang der Scheibe 5 bzw. Ringe 9 angeordneten Pole 10 die Schwungmasse. Im Zentrum der Scheibe ist die zur Wasserkraftmaschine führende Welle angeflanscht.

Das generell mit der Bezugsziffer 12 bezeichnete kombinierte Trag- und Führungslager weist einen rotierenden, unmittelbar an der Scheibe 5 befestigten Lagerteil 13 auf, welcher koaxial zur Welle 11 liegt. Der stationäre Lagerteil 14 ist unmittelbar auf einer auf dem Fundament 1 abgestützten Lagertragkonstruktion befestigt. Die Trag- und Führungssegemente 15 ruhen in Maschinenlängsrichtung auf Tragstempeln 16. Im Beispielsfall weisen die Segmente 15 L-förmigen Querschnitt auf.

Vorzugsweise findet ein selbstpumpendes hydrodynamisches Gleitlager Verwendung, wie es beispielsweise in der CH-PS 651 362 oder der US-PS 4,573,810 in allen Einzelheiten beschrieben ist, und der Massgabe, dass vorzugsweise Traglagersegment und Führungslagersegment einstückig ausgeführt sind.

Die Lagerkonstruktion besteht aus einem hohlen Kegelstumpf 17 und einem Kegelmantelwinkel zwischen 30° und 60° und ist aus entsprechend vorgebogenen Stahlblechen, die auf der Baustelle zusammengeschweisst- oder geschraubt werden. Am oberen Ende ist ein Abdeckring 18 an- bzw. eingeschweisst, auf dem der stationäre Lagerteil 14 befestigt ist. Am anderen Ende ist der Kegelstumpf mittels Fundamentankern 19 am Fundament 1 befestigt.

Zur Versteifung der Rotorkonstruktion sind eine der Anzahl Pole entsprechende Zahl von radialen Versteifungsrippen 20 sowohl an der Scheibe 5 als auch an den Ringen 9 oder Segmenten befestigt. Neben der Versteifung des Rotors dienen sie gleichzeitig zur Kühlluftförderung zu den Polen, wobei in den Ringen 9 oder Segmenten radiale Kühlluftschlitze oder -bohrungen vorgesehen sind.

An der Lagertragkonstruktion 17 ist auch der feststehende Teil 21 der Bremsvorrichtung abgestützt, die mit einem Bremsring 22 an der Unterseite des Ringstapels 9 zusammenwirkt.

Aus Gründen der Vollständigkeit ist in Fig. 1 auch der Schleifringapparat 23 des Generators eingezeichnet, dessen rotierender Teil 24 in platzsparender Weise auf der Oberseite der Scheibe 5 angeflanscht werden kann.

Die Fundamentgrube ist durch eine mit einer Montage- und Serviceöffnung 25 versehene Abdeckplatte 26 abgedeckt.

In Fig. 1 ist die durch die Erfindung erzielbare Reduktion der Bauhöhe sehr gut sichtbar. Der im Innenraum des Kegelstumpfes 17 vorhandene Raum kann sogar zur Unterbringung von Zusatzaggregaten, insbesondere der Oelkühler 27 und eventuell Oelpumpen des Lagers genutzt werden.

Der Stator ist, wie aus Fig. 2 zu erkennen ist, konzentrisch in der Fundamentgrube 1 angeordnet. Der Statorblechkörper 3 weist kein Gehäuse im üblichen Sinn mehr auf und ist über Schrägspeichen 28 gegenüber der Fundamentwand 2 abgestützt. Eine derartige Abstützung ist an sich bekannt und Gegenstand der DE-PS 2 459 237 oder der US-PS 4,060,744. Zu diesem Zweck sind am Blechpaket-Aussenumfang axial verlaufende schwalbenschwanzförmige Nuten 29 vorgesehen, in welche Leisten 30 mit doppelschwalbenschwanzförmigem Querschnitt angelegt sind.

An der Wand 2 sind auf in der Wand 2 verankerten Platten 31 Leisten 32 mit doppelschwalbenschwanzförmigem Querschnitt befestigt. Die Schrägspeichen 28 sind paarweise über Stege 33 verbunden. Radial innen und aussen weisen die Stege 33 schwalbenschwanzförmige Ausnehmungen 34 auf, welche mit den Leisten 30 und 32 zusammenwirken.

Die Leisten 30 und 32 sind jeweils in den Nuten 29 bzw. Ausnehmungen 34 formschlüssig eingehängt und z.B. verschweisst. Dieser Vorgang erfolgt nach Ausrichten des Stators 3 in der Fundamentgrube 1, wobei Zentrierhilfen 35 Verwendung finden, die nacheinander durch Schrägspeichenpaare ersetzt werden.

Aus Fig. 3 ist ferner zu entnehmen, dass die Schrägspeichenpaare bzw. deren innere Stege 33 jeweils mindestens eine Stossstelle des aus Blechsegmenten 36 geschichteten Blechpakets umfassen.

Durch die Schrägspeichen - der optimale Winkel α liegt zwischen 30° und 50° - werden temperaturbedingte Dehnungen des Stators in eine relative Drehung zwischen Stator 3 und Fundament 1 umgesetzt. Durch die Schrägspeichen wird ebenfalls das Drehmoment vom Statorblechpaket auf das Fundament übertragen.

In der Ausführungsform nach Fig. 4 ist der Rotormittelteil 6 als Hohlkegelstumpf ausgebildet, der im Nabenbereich mit einem auf dem rotierenden Lagerteil 13 befestigten Ring 7 angeschweisst ist. Am Aussenumfang ist der Rotormittelteil 6 mit einem Aussenring 8 verschweisst, welcher die Funktion einer Schwungmasse und Poltrageinrichtung für die Rotorpole 10 übernimmt. Eine mit einer Abdeckung 37 verschliessbare Oeffnung 38 im Rotormittelteil 6 ermöglicht den Zugang zum kombinierten Trag- und Führungslager 12, wobei hier anstelle L-förmiger Trag- und Führungssegmente getrennte Trag- und Führungssegmente 15a bzw. 15b Verwendung finden.

Wie im ersten Ausführungsbeispiel ist auch hier der Rotor 40 der Erregermaschine 25 am rotierenden Lagerteil 13 angeflanscht. Traversen 39 dienen zur Aufhängung des Stators 41 der Erregermaschine 25. Auch hier können radiale Versteifungsrippen 20a vorgesehen sein, welche sowohl mit dem Rotormittelteil 6 als auch mit dem Aussenring 8 verschweisst sind.

Der Vollständigkeit halber ist in Fig. 4 die Belüftung des Rotors/Stators eingezeichnet. In der Wand 2 des Fundaments 1 sind Durchbrüche 42,43,44, durch welche abwechselnd Kühlluft zu-bwz. abgeführt wird, angebracht.

In Fig. 4 ist schlussendlich strichliert die Kombination einer ebenen Scheibe 5a mit einem hohlkegelstumpfförmigen Rotormittelteil angedeutet, die auch dem erfindungsgemässen Lösungsgedanken folgt.

## Patentansprüche

1. Vertikalachsige elektrische Maschine in Schirmbauweise, insbesondere Hydrogenerator, mit einem auf einem Fundament (1) befestigten oder in einer Fundamentgrube und dort gegen die Grubenwand (2) abgestützten Stator (3) und einem im wesentlichen scheibenförmigen Rotor (4) mit einem kombinierten Trag- und Führungslager (12), welches auf einer gleichfalls auf dem Fundament (1) abgestützten Lagertragkonstruktion (17) befestigt ist, dadurch gekennzeichnet, dass die Lagertragkonstruktion als Hohlkegelstumpf (17) ausgebildet ist, das untere, den grösseren Durchmesser aufweisende Ende des Hohlkegelstumpfs unmittelbar auf dem Fundament (1) abgestützt und dort verankert ist, und am anderen (oberen) Ende des Hohlkegelstumpfs das kombinierte Trag- und Führungslager (17) angeordnet ist, welches Trag- und Führungslager (12) axial gesehen annähernd in der Mitte der Pole angeordnet ist.

2. Maschine nach Anspruch 1, dadurch gekennzeichnet, dass der Hohlkegelstumpf (17) aus kegelmantelförmig gebogenen Blechen, vorzugsweise gleicher Blechstärke, zusammengesetzt, insbesondere verschweisst oder verschraubt ist.

3. Maschine nach Anspruch 1 oder 2, dadurch gekennzeichnet, dass der Rotor (4) als ebene Scheibe (5) ausgebildet ist, an deren äusseren Bereich von unten eine kreisringförmige Schwungmasse, vorzugsweise aus Einzelringen (9) und/oder Ringsegmenten, befestigt ist, und dass die Rotorpole (10) am Aussenumfang der Scheibe (5) und der Ringe (9) angeordnet sind.

4. Maschine nach Anspruch 1 oder 2, dadurch gekennzeichnet, dass der Rotor (4) ein hohlkegelstumpfförmiges Mittelteil (6) umfasst, das untere, den grösseren Durchmesser aufweisende Ende des Mittelteils (6) mit einem Aussenring (8), das andere, den kleineren Durchmesser aufweisende Ende mit dem Lager (12) verbunden ist.

5. Maschine nach Anspruch 1 oder 2, dadurch gekennzeichnet, das der Rotor (4) eine ebene Scheibe (5a) und einen darunterliegenden hohlkegelstumpfförmigen Mittelteil (6) umfasst, an deren Aussenumfängen ein Aussenring (8) befestigt ist.

6. Maschine nach einem der Ansprüche 3 bis 5, dadurch gekennzeichnet, dass der Rotor (4) durch radial verlaufende Versteifungsrippen (20) verstärkt ist, welche sowohl an der Unterseite der Scheibe (5) als auch an der Innenseite der Schwungmasse (9) befestigt sind.

7. Maschine nach einem der Ansprüche 1 bis 6, dadurch gekennzeichnet, dass das Lager (12) ein selbstpumpendes kombiniertes Trag- und Führungslager ist.

8. Maschine nach Anspruch 7, dadurch gekennzeichnet, dass die Nebenaggregate (27) des Lagers innerhalb der Lagertragkonstruktion (17) angeordnet sind.

9. Maschine nach einem der Ansprüche 1 bis 8, dadurch gekennzeichnet, dass an die Unterseite der Scheibe (5) die Welle (11) der Wasserkraftmaschine und konzentrisch hierzu auch der rotierende Lagerteil (13) des Lagers (12) angeflanscht ist.

10. Maschine nach einem der Ansprüche 1 bis 9, dadurch gekennzeichnet, dass der Statorkörper (3) ohne Zwischenschaltung eines Statorgehäuses über Schrägspeicher (28) am Fundament (1) abgestützt ist.

## Claims

1. Vertical-axis electrical machine of umbrella design, especially a hydraulic generating set, having a stator (3) which is mounted on a foundation (1) or is supported in a foundation pit against the pit wall (2), there, and an essentially disc-shaped rotor (4) with a combined thrust and guide bearing (12) which is mounted on a bearing support structure (17) likewise supported on the foundation (1), characterised in that the bearing support structure is designed as a hollow truncated cone (17), the lower end of the hollow truncated cone, which has the larger diameter, is supported directly on the foundation (1) and anchored there, and the combined thrust and guide bearing (17) is arranged at the other (upper) end of the hollow truncated cone, which thrust and guide bearing (12), seen axially is arranged approximately in the middle of the poles.

2. Machine according to Claim 1, characterised in that the hollow truncated cone (17) is assembled from laminations bent in the form of a conical envelope, preferably of the same thickness of lamination, being especially welded or screwed.

3. Machine according to Claim 1 or 2, characterised in that the rotor (4) is designed as a plane disc (5), at the outer region of which there is mounted from below a circular rotating mass, preferably of individual rings (9) and/or ring segments, and the rotor poles (10) are arranged at the periphery of the disc (5) and the rings (9).

4. Machine according to Claim 1 or 2, characterised in that the rotor (4) comprises a middle part (6) in the form of a hollow truncated cone, and the lower end of the middle part (6), which end has the larger diameter, is connected to an outer ring (8), and the other end, which has the smaller diameter, is connected to the bearing (12).

5. Machine according to Claim 1 or 2, characterised in that the rotor (4) comprises a plane disc (5a) and a middle part (6) in the form of a hollow truncated cone lying thereunder, at the peripheries of which an outer ring (8) is mounted.

6. Machine according to one of Claims 3 to 5, characterised in that the rotor (4) is reinforced by radially extending rib stiffeners (20), which are mounted both at the underside of the disc (5) and at the inner side of the rotating mass (9).

7. Machine according to one of Claims 1 to 6, characterised in that the bearing (12) is a self-pumping combined thrust and guide bearing.

8. Machine according to Claim 7, characterised in that the sub-units (27) of the bearing are arranged inside the bearing support structure (17).

9. Machine according to one of Claims 1 to 8, characterised in that there is flanged on at the underside of the disc (5) a shaft (11) of the hydroelectric machine, and concentrically therewith also the rotating bearing part (13) of the bearing (12).

10. Machine according to one of Claims 1 to 9, characterised in that the stator body (3) is supported at the foundation (1) via sloping spokes (28) without the interposition of a stator frame.

## Revendications

1. Machine électrique à axe vertical, à disposition en parapluie, en particulier hydrogénérateur, avec un stator (3) fixé à une fondation (1) ou placé dans une fosse de fondation et appuyé dans celle-ci contre la paroi (2) de la fosse, et avec un rotor (4) essentiellement en forme de disque avec un palier combiné d'appui et de guidage (12), qui est fixé sur une structure (17) de support de palier également posée sur la fondation (1), caractérisée en ce que la structure de support de palier est constituée par un tronc de cône creux (17), en ce que l'extrémité inférieure du tronc de cône creux, qui présente le plus grand diamètre, repose directement sur la fondation (1) et y est ancrée, et en ce qu'à l'autre extrémité (l'extrémité supérieure) du tronc de cône creux est disposé le palier combiné d'appui et de guidage (12), lequel palier combiné d'appui et de guidage (12) est, considéré axialement, disposé approximativement au milieu des pôles.

2. Machine suivant la revendication 1, caractérisée en ce que le tronc de cône creux (17) est composé de tôles cintrées en forme de cône, ayant de préférence la même épaisseur, assemblées en particulier par soudage ou par vissage.

3. Machine suivant la revendication 1 ou 2, caractérisée en ce que le rotor (4) a la forme d'un disque plan (5), dans la région externe duquel est fixée, par dessous, une masse d'équilibrage en forme d'anneau, de préférence constituée d'anneaux séparés (9) et/ou de segments d'anneaux, et en ce que les pôles (10) du rotor sont disposés à la périphérie extérieure du disque (5) et des anneaux (9).

4. Machine suivant la revendication 1 ou 2, caractérisée en ce que le rotor (4) comprend une partie médiane (6) en forme de tronc de cône creux, en ce que l'extrémité inférieure de la partie médiane (6), celle qui présente le plus grand diamètre, est assemblée à une bague extérieure (8), et en ce que l'autre extrémité, qui présente le plus petit diamètre, est assemblée au palier (12).

5. Machine suivant la revendication 1 ou 2, caractérisée en ce que le rotor (4) comprend un disque plan (5a) et une partie médiane (6) en forme de tronc de cône creux située en dessous, aux périphéries desquels est fixée une bague extérieure (8).

6. Machine suivant l'une ou l'autre des revendications 3 à 5, caractérisée en ce que le rotor (4) est renforcé par des nervures radiales de renforcement (20), qui sont fixées aussi bien à la face inférieure du disque (5) qu'à la face intérieure de la masse d'équilibrage (9).

7. Machine suivant l'une ou l'autre des revendications 1 à 6, caractérisée en ce que le palier (12) est un palier combiné d'appui et de guidage à autopompage.

8. Machine suivant la revendication 7, caractérisée en ce que les ensembles auxiliaires (27) du palier sont disposés à l'intérieur de la structure de support de palier (17).

9. Machine suivant l'une ou l'autre des revendications 1 à 8, caractérisée en ce que l'arbre (11) de la machine hydraulique et, concentriquement à celui-ci, également la partie tournante (13) du palier (12) est fixée par bridage à la face inférieure du disque (5).

10. Machine suivant l'une ou l'autre des revendications 1 à 9, caractérisée en ce que le corps du stator (3) est appuyé sur la fondation (1) au moyen de rayons obliques (28), sans interposition d'une carcasse de stator.
